# EUROPEAN PATENT SPECIFICATION

(11) **EP 1 598 480 B1**
(45) Date of publication and mention of the grant of the patent: **26.03.2008**
(21) Application number: 04076491.2
(22) Date of filing: 19.05.2004
(51) Int. Cl.: E02B 7/28, E02B 7/36, F16K 3/316

(54) **Apparatus for closing or controlling the passage area of a passage, such as for instance a valve or a weir gate**
Gerät zum Schliessen oder Steuern eines Durchflussquerschnittes eines Durchganges, wie zum Beispiel ein Ventil oder eine Wehrklappe
Appareil pour fermer ou régler la superficie d'un passage, tel que par exemple une soupape ou un clapet de déversoir

(43) Date of publication of application: 23.11.2005
(73) Proprietor: KWT Holding B.V., 8256 SN Biddinghuizen (NL)
(72) Inventor: Boers, Hendrik Albertus, 8256 RS Biddinghuizen (NL)
(74) Representative: Winckels, Johannes Hubertus F.

(56) References cited:
- FR-A- 2 805 842
- US-A- 240 564
- US-A- 4 265 564
- US-A- 4 848 962
- US-A- 4 934 868

## Description

The invention relates to an apparatus for closing or controlling the passage area of a passage, such as for instance a valve or a weir gate, the apparatus being provided with a sliding plate which is adjustable from an opened position to a closed position and any positions therebetween, the sliding plate being movable with respect to a frame, which frame is mountable on a wall or the like in which the passage closable and/or controllable with the apparatus is included, the apparatus being provided with two guides which are each provided with a first guide part, and a second guide part which is arranged for cooperation with the first guide part for slidably guiding the movement of the sliding plate with respect to the frame, the apparatus being further provided with a driving facility for adjusting the sliding plate with respect to the frame.

With the currently known valves or weir gates, particularly valves or weir gates intended to resist very high working pressures, the guides in which the sliding plate is bearing-mounted need to have a particularly heavy design. This is a result of the fact that, with the known valves, the guides are not symmetrically loaded by the sliding plate. With the known valves and weir gates, the guides are often formed by a U-shaped section of which a first leg abuts the wall on which the valve is mounted, while the base of the U extends perpendicular to the wall, and while the second leg engages a guide section mounted on the sliding plate. When a high pressure is exerted on the sliding plate, the second legs of the U-shaped guides will be bent outwards. The bases of the U-shaped guides will also tend to bend outwards. In order to prevent this bending outwards, the U-shaped guides have a very heavy design and heavy consoles are often placed against the guides. It will be clear that such heavy guides and heavy consoles considerably increase the material usage and hence the cost price of the valve or the weir gate.

It is noted that US 240,564 discloses a water-gate that is slidably arranged against a frame, which frame comprises two guides with friction wheels as to enable easy movement of the gate in case of water pressure against it. US-A-4 848 962 discloses an apparatus according to the preamble of claim 1.

The invention intends an improved apparatus, in which the guides can have a relatively light design while still very high pressures can be resisted by the apparatus.

For this purpose, the apparatus of the type described in the opening paragraph is characterized according to the invention in that each first guide part comprises a box-shaped section, provided with a base, two legs connected with the base and two flanges facing each other which together bound a passage, the legs extending substantially perpendicular to the sliding plate and the flanges and the base extending in planes which are substantially parallel to the plane in which the sliding plate extends, each second guide part comprising at least one guide block or a guide strip which is slidably included in the box-shaped section, the part of the guide block or the guide strip included in the box-shaped section being wider than the passage, such that the guide block or the guide strip cannot exit the box-shaped section this passage.

The first guide parts referred to by the term box section in practice and in standards are symmetrically loaded when pressure is exerted on the sliding plate. The box sections, which remind a layperson most strongly of curtain rail sections, are fixed to the wall by their bases by means of anchors or bolts. These anchors or bolts are preferably positioned centrally between the two legs of the respective box sections. The second guide part designed as at least one guide block or as a guide strip has a similar function to a runner in a curtain rail section and, when the sliding plate is loaded, it is held and guided by the flanges of the box section. Because the box sections are symmetrically loaded, they can have a relatively light design and no consoles need to be provided to prevent the bending outwards of the sections.

According to a further elaboration, the first guide part is preferably connected with the frame and/or the wall and the second guide part is connected with the sliding plate. It goes without saying that, according to an alternative further elaboration of the invention, the possibilities also include the kinematic inversion, that is, that the first guide part is connected with the sliding plate and that the second guide part is connected with the frame and/or the wall.

The mounting of the first guide parts takes place simultaneously with the mounting of the frame on the wall. Such a procedure results in a rapid mounting of the frame and guides on the wall.

In order to realize a good closure of the sliding plate against the frame, according to a further elaboration of the invention, it is preferred when each first or second guide part which the box section, the at least one guide block or the guide strip, respectively, comprises is provided with adjusting means with the aid of which the position of the respective box section, the at least one guide block or the guide strip, respectively, is adjustable with respect to the sliding plate or the frame. With such adjusting means, a defined clamping force can be obtained in a simple manner by bringing the sliding plate in the closed position after mounting, and then tightening the adjusting means with a defined force, for instance by means of a torque wrench. Thus, a defined closing force of the sliding plate on the frame can be obtained in a simple manner when the sliding plate is in the closed position.

In order not to let the friction during opening and closing of the sliding plate occur during the whole course of opening and closing, it is preferred when, with a valve according to a further elaboration of the invention, the frame is provided with a front side and a back side, while, in mounted condition, the back side abuts the wall, while the front side extends in a plane which includes an angle with a plane in which the back side extends, while the angle is such that the distance between the front side and the back side near a lower side of the frame is greater than the distance between the front side and the back side near an upper side of the frame, such that, during closing of the sliding plate, there is no contact between the sliding plate and the front side of the frame until the last moment. Because there is no contact between the sliding plate and the front side of the frame until the last moment, the friction force mentioned will neither occur until that last moment, which is particularly favorable for wear and load reasons.

In order to realize a good watertight closure between the frame and the wall, according to a further elaboration of the invention, the frame can comprise a box-shaped construction, which box-shaped construction bounds a passage closable with the sliding plate, while a side of the box-shaped construction facing the wall bounds an open side of the box which is, in mounted condition, closed by the respective wall, while, in mounted condition, the room bounded by the box-shaped construction and the wall is filled with foam to obtain a water-retaining closure between the frame and the wall. Thus, supplemental to rubber sections, a good watertight closure can be created, even when the wall is not perfectly smooth. Such a smooth finish is required for the use of exclusively rubber sections.

According to a further elaboration of the invention, the sliding plate can be provided with strengthening ribs. Such strengthening ribs may be strips welded onto the sliding plate. Particularly with very high pressures, such strengthening ribs are generally desirable to reduce bending of the sliding plate.

The invention will now be further elucidated on the basis of an exemplary embodiment, with reference to the drawing, in which:
Fig. 1 shows a perspective view of an exemplary embodiment of the apparatus in the form of a valve;

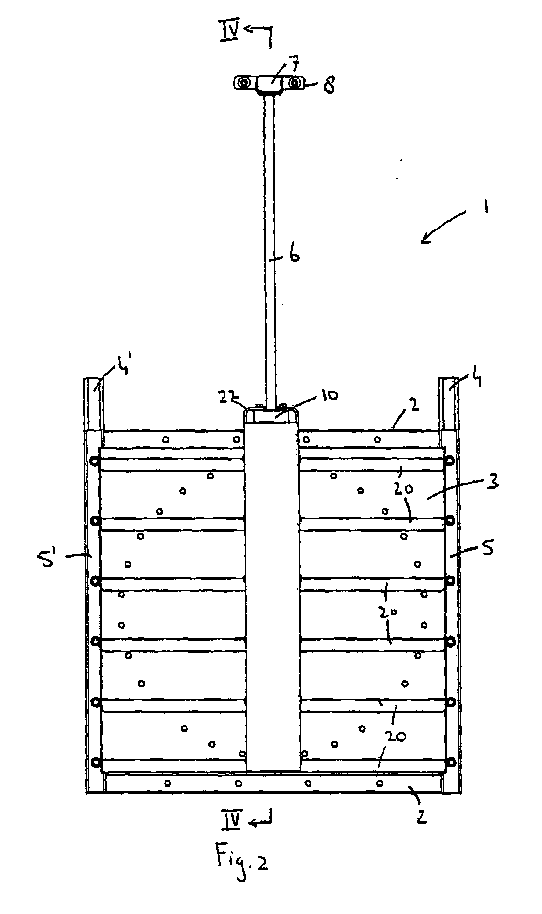

Fig. 2 shows a front view of the valve shown in Fig. 1;
Fig. 3 shows a side elevational view of the valve shown in Fig. 1;
Fig. 4 shows a cross-sectional view over line IV-IV from Fig. 2;
Fig. 5 shows detail V from Fig. 4;
Fig. 6 shows detail VI from Fig. 4;
Fig. 7 shows a top plan view of the valve shown in Fig. 1;
Fig. 8 shows detail VII from Fig. 7.

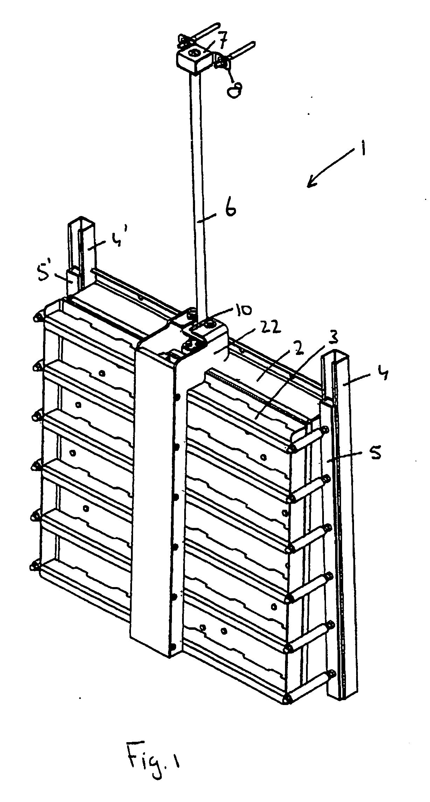

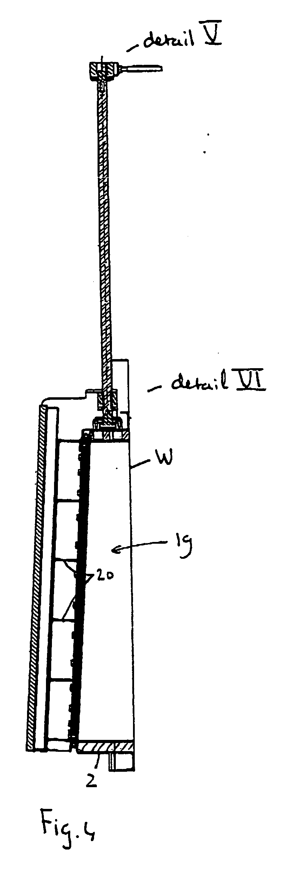

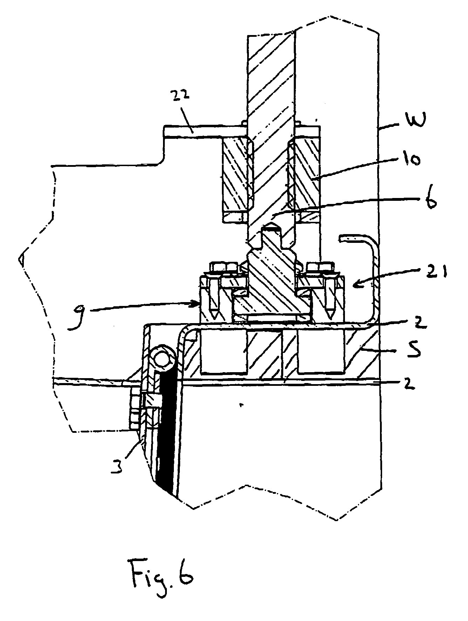

The exemplary embodiment of the valve 1 shown in the Figures is provided with a frame 2 and a sliding plate 3 which is adjustable from an opened position to a closed position shown in Fig. 1 and any positions therebetween. In practice, the frame is mounted to a wall W (see Figs. 4 and 6) in which a passage for a medium, such as for instance water, is included. The passage is closable with the aid of the valve. The valve can also have a controlling function, for instance to let a certain amount of water pass. The apparatus according to the invention further comprises a weir gate with a controlling function, in the sense that, for instance, a water level of a high reach or low reach can be controlled with the aid of a sliding plate. Here, the passage is not completely closed but controlled by varying the position of the sliding plate 3. Water or a similar medium then flows over the upper side of the sliding plate 3, at least as long as the water in the high reach is higher than the level of the upper side of the sliding plate 3.

The sliding plate 3 is slidably connected with the frame 2. To this end, the valve 1 is provided with two guides which are each provided with a first guide part 4, 4' and a second guide part 5, 5' which is arranged for the sliding cooperation with the first guide part 4, 4'. The valve 1 is further provided with a driving facility for adjusting the sliding plate 3 with respect to the frame 2. In the present exemplary embodiment, the driving facility comprises a screw spindle 6 which is, near an upper end, bearing-mounted in an upper bearing block 7 accommodated in a bearing support 8 connected with wall W. The spindle 6 is, near the lower side thereof, rotatably bearing-mounted in a lower bearing block 9 (see Fig. 4 and detail VI shown in Fig. 6). On the sliding plate 3, a threaded block 10 is provided which is provided with internal screw thread which is arranged for cooperation with the screw spindle 6. During rotation of the screw spindle 6, the threaded block 10, which is connected with the sliding plate 3 so as to be restrained from rotation, moves up or down along the screw spindle 6 depending on the rotation direction of the screw spindle 6. Of course, as a result, the sliding plate 3 also moves up or down, respectively.

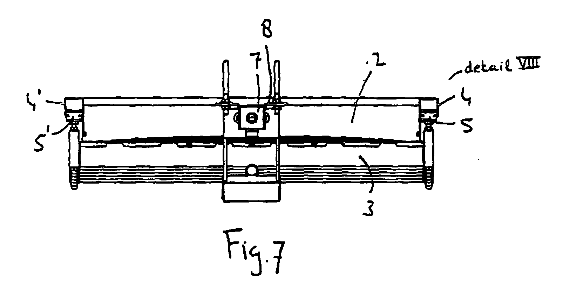

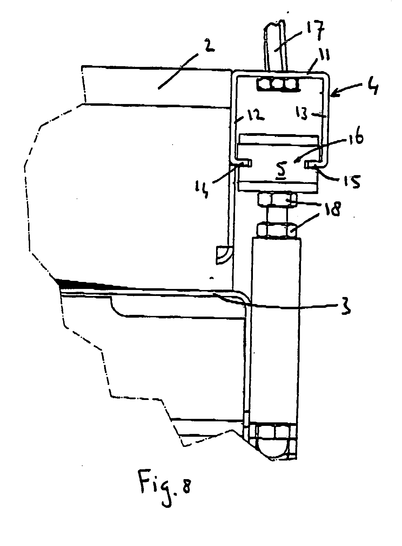

Fig. 1, but especially Fig. 7, and more in particular the detail VIII thereof, which is shown in Fig. 8, shows the special construction of a guide assembly. Clearly visible is the first guide part 4 which is designed as a box-shaped section 4 provided with a base 11, two legs 12, 13 connected with the base 11 and two flanges 14, 15 facing each other which together bound a passage 16. The legs 12, 13 extend substantially perpendicular to the sliding plate 3. The base 11, the flanges 14, 15 and the passage 16 extend in planes which are substantially parallel to the plane in which the sliding plate 3 extends. In the present exemplary embodiment, the second guide part 5 is designed as a guide strip 5 which is slidably included in the box section 4. The part of the guide strip 5 included in the box section 4 is wider than the passage 16, such that the guide strip 5 cannot exit the box section 4 via this passage 16. The box sections 4 are connected with the wall with the aid of bolts or anchors 17. These anchors 17 are preferably positioned centrally between the legs 12, 13 in the base 11 in order to ensure that forces exerted on the box section 4 by the guide strip 5 are centrally transmitted away to the wall W. The box section 4 is thus symmetrically loaded and the tendency to bend outwards of the box section 4 is minimized. The guide strip 5 is connected with the sliding plate 3 via adjusting means 18. Thus, the position of the guide strip 5 with respect to the sliding plate can be adjusted, so that a desired closing force of the sliding plate 3 against the frame 2 can be adjusted when the sliding plate 3 is in the closed position. It will be clear that the box-shaped section 4, 4' may also be connected with the sliding plate 3 instead of with the frame 2 or the wall W. In this condition, the guide strips 5 are connected with the frame 2 and/or fixedly mounted on the wall. Further, in an alternative embodiment, the adjusting means 18 may also be connected with the box-shaped sections 4, 4' instead of with the guide strips 5, 5'.

The frame 2 comprises a box-shaped construction, which box-shaped construction bounds a passage 19 closable with the sliding plate 3 (see Fig. 4). As is clearly visible in Fig. 4, a side of the box-shaped construction facing the wall is an open side which is, in mounted condition, closed by the respective wall W. In mounted condition, the room bounded by the box-shaped construction 2 and the wall W is filled with foam S to obtain a water-retaining closure between the frame 2 and the wall W. Although only a little foam S is visible in Fig. 4, in other vertical cross sections, a considerable amount of foam is visible next to the center, because, there, the circular passage 19 has a much smaller height than the rectangular box-shaped frame 2. The box-shaped construction will thus contain a considerable amount of foam after mounting.

In the present exemplary embodiment, the sliding plate 3 is provided with strengthening ribs 20. Such strengthening ribs 20 are required to be able to resist the possibly very high pressure exerted on the sliding plate 3.

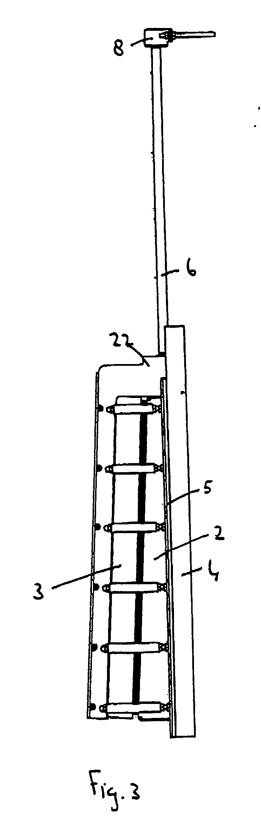

Figs. 3 and 4 further clearly show that the frame 2 is provided with a back side abutting the wall W and a front side which the sliding plate 3 abuts in closed position. This front side extends in a plane which includes an acute angle with the plane in which the back side extends. This angle is such that the distance between the front side and the back side near a lower side of the frame 2 is greater than the distance between the front side and the back side near an upper side of the frame 2. As a result, during closing of the sliding plate 3, there will be no contact between the sliding plate 3 and the front side of the frame 2 until the last moment. Therefore, the driving facility will not need to produce the greatest forces until the last moment.

What is special about the driving facility is that, in contrast to conventional valves, the spindle is not (only) supported on the upper side in a bearing block but particularly on the lower side in a lower axial bearing block 21. The lower bearing block 21 provides the axial bearing of the spindle 6. The upper bearing block 7 particularly has a bearing function in radial direction. The lower bearing block 21 is clearly shown in Fig. 6 which shows detail VI from Fig. 4. Fig. 6 clearly shows that the bearing block 21 is fixedly connected with the frame 2. Further, Fig. 6 also shows the threaded block 10 which is mounted on a threaded block support 22 which is fixedly connected with the sliding plate 3. What is good about this construction is that when the greatest force needs to be produced by the driving facility, the distance between the threaded block 10 and the lower bearing block 21 is very small. As a result, the length of the spindle 6 which is to transmit this force is very short, which is particularly favorable in connection with buckling. The risk of buckling particularly occurs with great lengths, such as with the conventional valves, in which, during closing of the sliding plate, the spindle is pressure-loaded and the loaded part of the spindle is almost the entire length of the spindle. With the present valve 1, the part of the spindle subject to pressure forces is, conversely, very short and, in addition, this part is tension-loaded during closing of the sliding plate 3, so that the risk of buckling does not occur at all. Only during opening of the sliding plate 3, the relatively short piece of spindle shown in Fig. 6 and extending between the lower bearing block 21 and threaded block 10 will be pressure-loaded. This pressure drops for a great part when the sliding plate 3 moves upwards even a little, because then, as a result of the inclined front side of the frame 2, the sliding plate 3 has already detached from the frame 2. Fig. 4 clearly shows that the threaded block support 22 is located on the upper side of the sliding plate 3 and extends from the sliding plate 3 in the direction of the back side of the frame 2, such that the threaded block 10 present thereon is in line with the upper bearing block 7 and the lower bearing block 21. As already indicated hereinabove, in a closed condition of the sliding plate 3, the distance between the threaded block 10 and the lower bearing block 21 is relatively small, which is particularly important for preventing buckling.

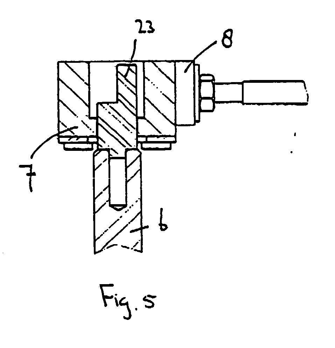

Fig. 5 shows the upper bearing block 7 in more detail. Further, Fig. 5 shows that an upper side of the spindle 6 is provided with an engaging part 23 which a wrench or a motor for driving the spindle 6 can engage. The bearing shown exclusively has a radial bearing function. However, it is also possible to give the upper bearing an axial bearing function as well. Under these conditions, the spindle is provided with an axial bearing both at the upper and at the lower end. In such an embodiment, the spindle will be tension-loaded both during opening and closing, or pulling up and lowering of the sliding plate, so that the risk of buckling is zero.

It is clear that the invention is not limited to the exemplary embodiment described but that various modifications are possible within the scope of the invention as defined by the claims. For instance, the constructions described can also be applied with advantage to weir gates, which may be understood to mean overflow gates or low-pass gates, and which can serve for controlling the water level in a watercourse. Further, the box sections may consist from one flanged or rolled part or they may be assembled from two or more parts. It is noted that a box-shaped section is also understood to mean a section which has legs and/or flanges having unequal lengths.

## Claims

1. An apparatus for closing or controlling the passage area of a passage, such as for instance a valve (1) or a weir gate, wherein the apparatus is provided with a frame (2) and a sliding plate (3) which is adjustable from an opened position to a closed position and any positions therebetween, wherein the sliding plate (3) is slidable with respect to the frame (2), which frame (2) is mountable on a wall (W) or the like in which the passage closable and/or controllable with the apparatus is included, wherein the apparatus is provided with two guides which are each provided with a first guide part (4, 4'), and a second guide part (5, 5') which is arranged for cooperation with the first guide part (4, 4') for slidably guiding the movement of the sliding plate (3) with respect to the frame (2), wherein the apparatus is further provided with a driving facility for adjusting the sliding plate (3) with respect to the frame (2), **characterized in that** each first guide part comprises a box-shaped section (4) which is provided with a base (11), two legs (12, 13) connected with the base (11) and two flanges (14, 15) facing each other which together bound a passage (16), wherein the legs (12, 13) extend substantially perpendicular to the sliding plate (3) and wherein the flanges (14, 15) and the base (11) extend in planes which are substantially parallel to the plane in which the sliding plate (3) extends, wherein each second guide part (5, 5') comprises at least one guide block or a guide strip (5) which is slidably included in the box-shaped section (4), wherein the part of the at least one guide block or the guide strip (5) included in the box-shaped section (4) is wider than the passage (16), such that the at least one guide block or the guide strip (5) cannot exit the box-shaped section (4) via this passage (16).

2. An apparatus according to claim 1, wherein each first guide part (4, 4') is connected with the frame (2) and/or the wall (W) and wherein each second guide part (5, 5') is connected with the sliding plate (3).

3. An apparatus according to claim 1, wherein each first guide part (4, 4') is connected with the sliding plate (3) and wherein each second guide part (5, 5') is connected with the frame (2) and/or the wall (W).

4. An apparatus according to according to any one of the preceding claims, wherein each first(4, 4') or second guide part (5, 5') which the box-shaped section (4), the at least one guide block or the guide strip (5), respectively, comprises is provided with adjusting means (18) with the aid of which the position of the respective box-shaped section (4), the at least one guide block or the guide strip (5), respectively, is adjustable with respect to the sliding plate (3) or the frame (2).

5. An apparatus according to any one of the preceding claims, wherein the frame (2) is provided with a front side and a back side, wherein, in mounted condition, the back side abuts the wall (W), wherein the front side extends in a plane which includes an acute angle with a plane in which the back side extends, wherein the angle is such that the distance between the front side and the back side near a lower side of the frame (2) is greater than the distance between the front side and the back side near an upper side of the frame (2), such that, during closing of the sliding plate (3), there is no contact between the sliding plate (3) and the front side of the frame (2)until the last moment.

6. An apparatus according to any one of the preceding claims, wherein the frame (2) comprises a box-shaped construction, which box-shaped construction bounds the passage closable with the sliding plate (3), wherein a side of the box-shaped construction facing the wall (W) bounds an open side of the box which is, in mounted condition, closed by the respective wall, wherein, in mounted condition, the room bounded by the box-shaped construction and the wall (W) is filled with foam (S) to obtain a water-retaining closure between the frame (2) and the wall (W).

7. An apparatus according to any one of the preceding claims, wherein the sliding plate (3) is provided with strengthening ribs (20).

8. An apparatus according to any one of the preceding claims, wherein the driving facility comprises a spindle (6) which is, near an upper side, bearing-mounted in an upper bearing block (7) accommodated in a bearing support, wherein the spindle is (6), near a lower side thereof, rotatably bearing-mounted in a lower bearing block (21) which is fixedly connected with the frame (2), wherein the sliding plate (3) is provided with a threaded block (10) provided with internal screw thread which is arranged for cooperation with the screw spindle (6).

9. An apparatus according to claim 8, wherein the sliding plate (3) is provided with a threaded block support (22) on which the threaded block (10) is mounted, wherein the threaded block support (22) is located on an upper side of the sliding plate (3) and extends from the sliding plate (3) in the direction of the back side of the frame (2), such that the threaded block (10) mounted thereon is in line with the upper bearing block (7) and the lower bearing block (21).

10. An apparatus according to claim 8 or 9, wherein, in a closed condition of the sliding plate (3), the distance between the threaded block (10) and the lower bearing block (21) is relatively small.

11. An apparatus according to any one of claims 8-10, wherein the lower bearing block (21) is an axial bearing.

12. An apparatus according to any one of claims 8-11, wherein the upper bearing block (7) is a radial bearing.

## Patentansprüche

1. Vorrichtung zum Schließen oder Regeln der Durchlassfläche eines Durchlasses, beispielsweise ein Ventil (1) oder ein Wehrverschluss, wobei die Vorrichtung mit einem Rahmen (2) und einer Schiebeplatte (3) aufweist, die zwischen einer offenen Position und einer geschlossenen Position und jeder beliebigen Position dazwischen verstellbar ist, wobei die Schiebeplatte (3) in bezug auf den Rahmen (2) gleitend verschiebbar ist, wobei der Rahmen (2) an einer Wand (W) anbringbar ist, in welcher sich der mittels der Vorrichtung schließbare und/oder regelbare Durchlass befindet, wobei die Vorrichtung mit zwei Führungen versehen ist, die jeweils mit einem ersten Führungsteil (4, 4') und einem zweiten Führungsteil (5, 5') versehen sind, das zum Zusammenwirken mit dem ersten Führungsteil (4, 4') vorgesehen ist, um die Bewegung der Schiebeplatte (3) in bezug auf den Rahmen (2) gleitend zu führen, wobei die Vorrichtung ferner mit einer Antriebseinrichtung zum Verstellen der Schiebeplatte (3) in bezug auf den Rahmen (2) versehen ist, **dadurch gekennzeichnet, dass** jedes erste Führungsteil ein kastenförmiges Profil (4) aufweist, der mit, einer, Basis (11), zwei mit der Basis (11) verbundenen Schenkeln (12, 13) und einander zugewandten Flanschen (14, 15) versehen ist, welche zusammen den Durchlass (16) begrenzen, wobei sich die Schenkel (12, 13) im Wesentlichen senkrecht zu der Schiebeplatte (3) erstrecken, und wobei die Flansche (14, 15) und die Basis (11) sich in Ebenen erstrecken, welche im Wesentlichen parallel zu der Ebene verlaufen, in welcher sich die Schiebeplatte (3) erstreckt, wobei jedes zweite Führungsteil (5, 5') mindestens einen Führungsblock oder eine Führungsleiste (5) umfasst, welche gleitend verschiebbar in dem kastenförmigen profil (4) enthalten ist, wobei der in dem kastenförmigen Profil (4) enthaltene Teil des mindestens einen Führungsblocks oder der Führungsleiste (5) breiter als der Durchlass (16) ist, so dass der mindestens eine Führungsblock oder die Führungsleiste (5) das kastenförmige Profil (4) nicht durch diesen Durchlass (16) verlassen kann.

2. Vorrichtung nach Anspruch 1, bei der jedes erste Führungsteil (4, 4') mit dem Rahmen (2) und/oder der Wand (W) verbunden ist, und wobei jedes zweite Führungsteil (5, 5') mit der Schiebeplatte (3) verbunden ist.

3. Vorrichtung nach Anspruch 1, bei der jedes erste Führungsteil (4, 4') mit der Schiebeplatte (3) verbunden ist, und wobei jedes zweite Führungsteil (5, 5') mit dem Rahmen (2) und oder der Wand (W) verbunden ist.

4. Vorrichtung nach einem der vorhergehenden Ansprüche, bei der jedes erste (4, 4') oder jedes zweite Führungsteil (5, 5'), welches das kastenförmige Profil (4), der mindestens eine Führungsblock beziehungsweise die Führungsleiste (5) aufweist, mit Verstelleinrichtungen (18) versehen ist, mittels welcher die position des jeweiligen kastenförmigen Profils (4), des mindestens einen Führungsblocks beziehungsweise der Führungsleiste (5) in bezug auf die Schiebeplatte (3) oder den Rahmen (2) verstellbar ist.

5. Vorrichtung nach einem der vorhergehenden Ansprüche, bei welcher der Rahmen (2) mit einer Vorderseite und einer Rückseite versehen ist, wobei die Rückseite im montierten Zustand an der Wand (W) anliegt, wobei sich die Vorderseite in einer Ebene erstreckt, welche einen spitzen Winkel mit einer Ebene einschließt, in der sich die Rückseite erstreckt, wobei der Winkel derart ist, dass der Abstand zwischen der Vorderseite und der Rückseite nahe der unteren Seite des Rahmens (2) größer ist als der Abstand zwischen der Vorderseite und der Rückseite nahe der oberen Seite des Rahmens (2) so dass während des Schließens der Schiebeplatte (3) bis zum letzten Moment kein Kontakt zwischen der Schiebeplatte (3) und der Vorderseite des Rahmens (2) gegeben ist.

6. Vorrichtung nach einem der vorhergehenden Ansprüche, bei welcher der Rahmen (2) einen kastenförmigen Aufbau aufweist, welcher den mittels der Schiebeplatte (3) schließbaren Durchlass begrenzt, wobei eine der Wand (W) zugewandte Seite des kastenförmigen Aufbaus eine offene Seite des Kastens begrenzt, welche im montierten Zustand von der jeweiligen Wand geschlossen ist, wobei der von dem kastenförmigen Auf bau und der Wand (W) begrenzte Raum im montierten Zustand mit Schaum (S) gefüllt ist, um einen wasserrückhaltenden Verschluss zwischen dem (2) und der Wand (W) zu erhalten.

7. Vorrichtung nach einem der vorhergehenden Ansprüche, bei der die Schiebeplatte (3) mit Verstärkungsrippen (20) versehen ist.

8. Vorrichtung nach einem der vorhergehenden Ansprüche, bei der die Antriebseinrichtung eine Spindel (6) umfasst, welche nahe einer oberen Seite in einem oberen Lagerblock (7) gelagert ist, welcher in einer Lagerstütze aufgenommen ist, wobei die Spindel (6) nahe ihrer unteren Seite drehbar in einem unteren Lagerblock (21) gelagert ist, der fest mit dem Rahmen (2) verbunden ist, wobei die Schiebeplatte (3) mit einem Gewindeblock (10) versehen ist, welcher ein Innenschraubgewinde aufweist, das zum Zusammenwirken mit der Schraubspindel (6) ausgebildet ist.

9. Vorrichtung nach Anspruch 8, bei der die Schiebeplatte (3) mit einer Gewindeblockstütze (22), auf welcher der Gewindeblock (10) angebracht ist, wobei die Gewindeblockstütze (22) auf der Oberseite der Schiebeplatte (3) angeordnet ist und sich von der Schiebeplatte (3) in Richtung der Rückseite des Rahmens (2) derart erstreckt, dass der daran angebrachte Gewindeblock (10) in einer Linie mit dem oberen Lagerblock (7) und dem unteren Lagerblock (21) liegt.

10. Vorrichtung nach Anspruch 8 oder 9, bei der im geschlossenen Zustand der Schiebeplatte (3) der Abstand zwischen dem Gewindeblock (10) und dem unteren Lagerblock (21) relativ gering ist.

11. Vorrichtung nach einem der Ansprüche 8-10, bei welcher der untere Lagerblock (21) ein Axiallager ist.

12. Vorrichtung nach einem der Ansprüche 8-11, bei welcher der obere Lagerblock (7) ein Radiallager ist.

## Revendications

1. Appareil destiné à fermer ou commander la section de passage d'un passage, tel que par exemple une vanne (1) ou une pelle de déversoir, l'appareil étant pourvu d'un cadre (2) et d'une plaque coulissante (3) qui est réglable depuis une position ouverte jusqu'à une position fermée et n'importe quelle position entre celles-ci, la plaque coulissante (3) pouvant coulisser par rapport au cadre (2), lequel cadre (2) peut être monté sur une paroi (W) ou équivalent dans laquelle le passage pouvant être fermé et/ou pouvant être commandé avec l'appareil est inclus, l'appareil étant pourvu de deux guides qui sont pourvus chacun d'une première partie de guidage (4, 4'), et d'une deuxième partie de guidage (5, 5') qui est prévue pour une coopération avec la première partie de guidage (4, 4') afin de guider de façon coulissante le mouvement de la plaque coulissante (3) par rapport au cadre (2), l'appareil étant en outre pourvu d'un dispositif d'entraînement afin de régler la plaque coulissante (3) par rapport au cadre (2), **caractérisé en ce que** chaque première partie de guidage comporte une section en forme de boîte (4) qui est pourvue d'une base (11), de deux branches (12, 13) reliées à la base (11) et de deux rebords (14, 15) l'un en face de l'autre qui délimitent ensemble un passage (16), les deux branches (12, 13), s'étendent de manière sensiblement perpendiculaire à la plaque coulissante (3) et les rebords (14, 15) et la base (11) s'étendant dans des plans qui sont sensiblement parallèles au plan dans lequel la plaque coulissante (3) s'étend, chaque deuxième partie de guidage (5, 5') comportant au moins un bloc de guidage ou une bande de guidage (5) qui est inclus de façon coulissante dans la section en forme de boîte (4), la partie du au moins un bloc de guidage ou bande de guidage (5) incluse dans la section en forme de boîte (4) étant plus large que le passage (16), de telle sorte que le au moins un bloc de guidage ou bande de guidage (5) ne peut sortir de la section en forme de boite (4) par le passage (16).

2. Appareil selon la revendication 1, dans lequel chaque première partie de guidage (4, 4') est reliée au cadre (2) et/ou à la paroi (W) et dans lequel chaque deuxième partie de guidage (5, 5') est reliée à la plaque coulissante (3).

3. Appareil selon la revendication 1, dans lequel chaque première partie de guidage (4, 4') est reliée à la plaque coulissante (3) et dans lequel chaque deuxième partie de guidage (5, 5') est reliée au cadre (2) et/ou à la paroi (W).

4. Appareil selon l'une quelconque des revendications précédentes, dans lequel chaque première (4, 4') ou deuxième partie de guidage (5, 5') que compose respectivement la section en forme de boîte (4) ou le au moins un bloc de guidage ou bande de guidage (5), est pourvue de moyens de réglage (18) à l'aide desquels la position la section en forme de boîte (4) ou du au moins un bloc de guidage ou bande de guidage (5) respectivement est réglable par rapport à la plaque coulissante (3) ou au cadre (2).

5. Appareil selon l'une quelconque des revendications précédentes, dans lequel le cadre (2) est pourvu d'un côté avant et d'un côté arrière, dans la condition montée, le côté arrière butant contre la paroi (W), le côté avant s'étendant dans un plan qui comprend un angle aigu avec un plan dans lequel s'étend le côté arrière, l'angle étant tel que la distance entre le côté avant et le côté arrière près d'un côté inférieur du cadre (2) est supérieur à la distance entre le côté avant et le côté arrière près d'un côté supérieur du cadre (2), de telle sorte que, pendant la fermeture de la plaque coulissante (3), il n'y a pas de contact entre la plaque coulissante (3) et le côté avant du cadre (2) avant le dernier moment.

6. Appareil selon l'une quelconque des revendications précédentes, dans lequel le cadre (2) comprend une construction en forme de boîte, laquelle construction en forme de boîte délimite le passage pouvant être fermé avec la plaque coulissante (3), un côté de la construction en forme de boîte face à la paroi (W) délimitant un côté ouvert de la boîte qui est, dans la condition montée, fermé par la paroi respective, dans la condition montée, la chambre délimitée par la construction en forme de boîte et la paroi (W) étant remplie avec de la mousse (S) afin d'obtenir une fermeture retenant l'eau entre le cadre (2) et la paroi (W).

7. Appareil selon l'une quelconque des revendications précédentes, dans lequel la plaque coulissante (3) est pourvue de nervures de renfort (20).

8. Appareil selon l'une quelconque des revendications précédentes, dans lequel le dispositif d'entraînement comprend un arbre (6) qui, près d'un côté supérieur, est monté sur palier dans un bloc de palier supérieur (7) logé dans un support de palier, l'arbre (6), près d'un côté inférieur, étant monté sur palier de façon rotative dans un bloc de palier inférieur (21) qui est relié de façon fixe au cadre (2), la plaque coulissante (3) étant pourvue d'un bloc fileté (10) pourvu d'un filet de vis interne qui prévu pour coopération avec l'arbre à vis (6).

9. Appareil selon la revendication 8, dans lequel la plaque coulissante (3) est, pourvue d'un support de bloc fileté (22) sur lequel le bloc fileté (10) est monté, le support de bloc fileté (22) étant disposé sur un côté supérieur de la plaque coulissante (3) et s'étendant depuis la plaque coulissante (3) dans la direction du côté arrière du cadre (2), de telle sorte que le bloc fileté (10) monté dessus est aligné avec le bloc de palier supérieur (7) et le bloc de palier inférieur (21).

10. Appareil selon la revendication 8 ou 9, dans lequel, dans une condition fermée de la plaque coulissante (3), la distance entre le bloc fileté (10) et le bloc de palier inférieur (21) est relativement faible.

11. Appareil selon l'une quelconque des revendications 8 à 10, dans lequel le bloc de palier inférieur (21) est un palier axial.

12. Appareil selon l'une quelconque des revendications 8 à 11 dans lequel le bloc de palier supérieur (7) est un palier radial.
